# EUROPEAN PATENT APPLICATION

(11) **EP 0 982 660 A2**
(43) Date of publication of application: **01.03.2000**
(21) Application number: 99116639.8
(22) Date of filing: 25.08.1999
(51) Int. Cl.: G06F 12/08

(54) **Multiprocessor system with plurality of nodes**

(30) Priority: 28.08.1998 JP 24286298
(71) Applicant: Hitachi, Ltd., Chiyoda-ku, Tokyo 101-8010 (JP)
(72) Inventor: Tarui, Toshiaki, Sagamihara-shi (JP); Okochi, Toshio, Ballsbridge, Dublin 4 (IE); Fujii, Hiroaki, Tokorozawa-shi (JP); Yasuda, Yoshiko, Tokorozawa-shi (JP); Inohara, Shigekazu, Kokubunji-shi (JP)
(74) Representative: Strehl Schübel-Hopf & Partner

(57) **Abstract**

A NUMA type multiprocessor including a shared memory dispersedly arranged in a plurality of nodes, wherein each node includes a register for instructing a page for initialization and a register for giving an instruction to invalidate the data on the caches of other nodes for each page when an OS recovers the page. Means is disposed for restricting line transfer from other nodes and invalidating the data on the caches of other nodes when write occurs to the page designated by the former for initialization, etc. A command for collectively invalidating the page to other nodes is generated for the page designated by the latter. There are further disposed means for storing the state where the page is exclusive, in response to each page of the main memory inside the node, and means for setting the state of the corresponding page to the exclusive state when the execution of the latter command is completed.

## Description

### BACKGROUND OF THE INVENTION

This invention relates generally to information processing units such as personal computers (PC), work stations (WS), servers, and so forth, and more particularly to a multiprocessor wherein a plurality of processors share a memory

A main memory sharing type multiprocessor construction has become wide spread in recent years in both PC and WS. The construction system of this main memory sharing type multiprocessor includes a UMA (Uniform Memory Access) system that concentratedly arranges the main memory and a NUMA (Non-Uniform Memory Access system) that arranges each CPU and a part of the main memory as a set. Though the UMA was dominant in the main memory sharing multiprocessor at an early stage, the NUMA system has recently been employed particularly to interconnect a large number of processors, because packaging is easier and scalability is higher.

Hereinafter, each element processor that constitutes the main memory sharing multiprocessor will be referred to as a "node". A plurality of nodes are connected to one another by a connection mechanism and constitute a system. Each node includes at least one CPU, a cache and a main memory (in the case of the NUMA).

To constitute a main memory sharing multiprocessor by connecting a plurality of CPUs, a system has gained a wide application that connects caches of the processors by a shared bus and exchanges data by using a snoop cache protocol. Coherence of the caches can be secured by monitoring the bus command of other processors outputted on the bus, in the cache of each processor, and managing the exclusive/shared state of the cache line.

An example of the cache system of the multiprocessor is described in "A Low-Overhead Coherence Solution for Multiprocessors with Private Cache Memories", The 11^{th} ISCA Conference Proceedings, pp.348-354. In these systems, the shared state of data such as exclusive/shared state is stored in TAG of the cache (write-back type) of each processor, and commands such as readout, invalidation, etc. are sent to the bus so as to secure cache coherence. When any cache miss occurs in a certain processor, a command for data request is outputted on the bus, and the data is line-transferred from the main memory or from the caches of other processors (if the cache of the corresponding processor has the latest data). When write is executed to the line under the shared state in a certain processor, a command for invalidating the data on the caches of other processors is sent onto the bus. In this way, coherence of the data on the caches of a plurality of processors can be strictly maintained by using this cache coherence control protocol, and a programmer can conduct programming without particularly taking the presence of the caches into consideration.

The cache coherence control protocol executes mechanically and strictly the cache coherence control irrespective of the meaning of a given program. Therefore, there is the possibility that extremely useless processing is executed in some cases. Let's assume the case as a typical example where zero (0) is written into the whole page for initializing the page. This process occurs when an OS and a middle-ware recover the used page and execute re-allocation. In this case, the conventional cache coherence control executes the following processes for all the lines in the page. (It will be assumed hereby, however, that the corresponding line is not cached to the processor executing initialization.)
(1) A cache miss occurs when the CPU writes "0" into the cache line.
(2) The cache generates a fetch-and-invalidate command to the caches of all the other nodes and to the main memory.
(3) The other caches or the main memory line-transfers the line to be accessed to the access requesting CPU (the data on other caches are invalidated).
(4) After the corresponding line is inputted to the access requesting CPU, the access requesting CPU writes "0" to the data on the cache.

A specific command of CPUs "Data Cache Block Set to Zero (DBCZ) is described in "The PowerPC Architecture", p. 347. In this DBCZ, the line "ALL 0" is allocated to a cache and at the same time, other caches are invalidated.

### SUMMARY OF THE INVENTION

Generally, when a page is cleared, this page has been recovered in the system program because it has not been used for a certain long time. Therefore, the possibility is low that the corresponding page is registered to the cache of its own CPU. However, when the CPU executes the DBCZ command of the conventional system and if the line corresponding to its own cache is not cached, there is the possibility that this line is cached to other nodes. Therefore, an invalidation command must be outputted to invalidate the data on the cache of other nodes. Even when the corresponding line exists in its own cache, the invalidation command to other nodes is yet necessary if it is shared. In this way, when the page is cleared by using the DBCZ command, the invalidation command must be outputted to other nodes in almost all cases, and the following problems arise.
(1) A large number of bus commands are necessary and bus traffic increases.
(2)) A wait time of the CPU occurs with the output of the bus command, and the CPU overhead increases.
(3) Because latency of page clear increases with (2), the overhead of page allocation routine increases.

Also, there is the case where the DBCZ command is not supported depending on the CPUs. Therefore, an architecture that reduces the initialization process without relying on command set by the CPU is required even when the conventional cache protocol is used.

In the conventional system, no access is made to the data of the page after the page is used up and until it is cleared. Therefore, the cache line to which write is made remains under the "modified" state in the cache of the node to which write is made (until it is purged by "replace", and uselessly occupies the cache.

This problem occurs not only in the initialization process but also in the write process to the entire page in page copy, I/O, and so forth. In the write process of these cases, too, the old data that have been written into the page up to the present moment are not at all used. Therefore, an architecture capable of writing new data without executing line-transfer of the old data from other nodes by means similar to DBCZ is required. Furthermore, the problems described in the items (1) to (3) must be solved.

If the conventional cache protocol is used as such to read out the main memory inside local node in the NUMA architecture, the main memory of the local node must be accessed after checking all the other nodes by a fetch command. For, there is the possibility that the corresponding data is cached to other nodes. Entirely the same problem develops in the readout of the main memory for writing. In the case of the NUMA, the initialization/recovery process of the page is executed by the processor of the node that has that page. In this case, it is ensured that after initialization of the page is complete, the corresponding page is not cached to any other nodes. Therefore, when the data inside the corresponding page is accessed next time, the cache check of other nodes can be omitted, in principle.

It is an object of the present invention to reduce the traffic of cache coherent command, that is necessary for a collective write process for modifying an entire page at once and is outputted between the nodes and at the same time, to reduce a CPU overhead necessary for page initialization.

It is another object of the present invention to gain access to a page, for which initialization is finished and which is not obviously cached to other nodes, without outputting a cache coherent command to other nodes in a NUMA shared memory system.

It is still another object of the present invention to eliminate the occupation of a cache by the data of the page which is used up and to which access is made no longer.

It is still another object of the present invention to accomplish a function of reducing the overhead required for transferring the data from other caches without relying on a command set of a CPU in page initialization, and so forth.

To accomplish the objects described above, each node of the main memory shared multiprocessor includes a register for instructing page invalidation of remote nodes, and means for reporting to all the nodes the occurrence of a write process into this register. The node further includes means for generating a command for purging all the cache lines belonging to a page inside the node out from a CPU cache of the local node upon receiving the report from other nodes, and means for reporting the finish of page invalidation to a requesting node after all the cache lines belonging to the page are purged. Furthermore, a bit for storing whether the page is under the exclusive state or the shared state is provided to each page of the main memory, and means is provided for setting the bit to the exclusive state to the page for which invalidation is complete. This page is set to the shared state when the access is made to this page from other nodes. Each node does not generate a cache coherent command outside the node for the page whose page exclusive bit is under the exclusive state.

When the program uses up the page, the OS and the middle-ware having this page on the main memory write the page number to the invalidation indication register. As a result, the cache lines belonging to the page on the other nodes are all purged out from the cache, and the attribute of the page can be set to the exclusive state. When the initialization/block write process is later made to this page, a command need not be outputted outside the node.

As described above, the data on the caches of other nodes can be invalidated for each page by the procedures described above. The inter-node commands necessary for the process described above are merely a write command for entire page modification and a reply to this command. Therefore, the number of commands between the nodes can be reduced. The processes after the command is written to the page invalidation indication register are all executed by hardware. Therefore, the CPU overhead can be reduced.

To accomplish the objects described above, means is provided for indicating that the access to the page of the main memory is a block write process such as initialization. Means is also provided for sending only an "invalidate" part to other nodes and sending back a dummy data for a "fetch" part when a fetch-and-invalidate command for this page is generated from the CPU to other nodes. In this way, a useless data transfer request from other nodes can be reduced without using a specific command of the CPU.

### BRIEF DESCRIPTION OF THE DRAWINGS

Fig. 1 is a block diagram showing the principal construction of a multiprocessor system according to an embodiment of the present invention;
Fig. 2 is a functional block diagram of an RAT check circuit of the embodiment described above;
Fig. 3 is a functional block diagram of a command conversion circuit of the embodiment described above;
Fig. 4 is a functional block diagram of an access determination circuit described above;
Fig. 5 is a functional block diagram of a page invalidation counter of the embodiment described above;
Fig. 6 is a functional block diagram of an ACK wait circuit of the embodiment described above;
Fig. 7 is a functional block diagram of a block write page indication register of the embodiment described above;
Fig. 8 is a functional block diagram of a remote page invalidation circuit of the embodiment described above;
Fig. 9 is a functional block diagram of an RAT of the embodiment described above;
Fig. 10 is a flowchart showing the sequence of initialization of a main memory by an OS in the embodiment described above;
Fig. 11 is a flowchart showing the sequence of block page copy by the OS in the embodiment described above;
Fig. 12 is a flowchart showing the sequence of page recovery by the OS in the embodiment described above;
Fig. 13 is a block diagram showing the principal construction of a multiprocessor system in another embodiment of the present invention;
Fig. 14 is a functional block diagram of a page clear counter of the embodiment described above;
Fig. 15 is a block diagram showing the principal construction of a multiprocessor system in still another embodiment of the present invention;
Fig. 16 is a functional block diagram of a page invalidation counter in the embodiment described above;
Fig. 17 is a functional block diagram of a page invalidation counter of each node in still another embodiment of the present invention;
Fig. 18 is a block diagram of a multiprocessor system in still another embodiment of the present invention;
Fig. 19 is a functional block diagram of a block write page indication register of each node in still another embodiment of the present invention; and
Fig. 20 is a flowchart showing the process of the block write page indication registor described above.

### DESCRIPTION OF THE EMBODIMENTS

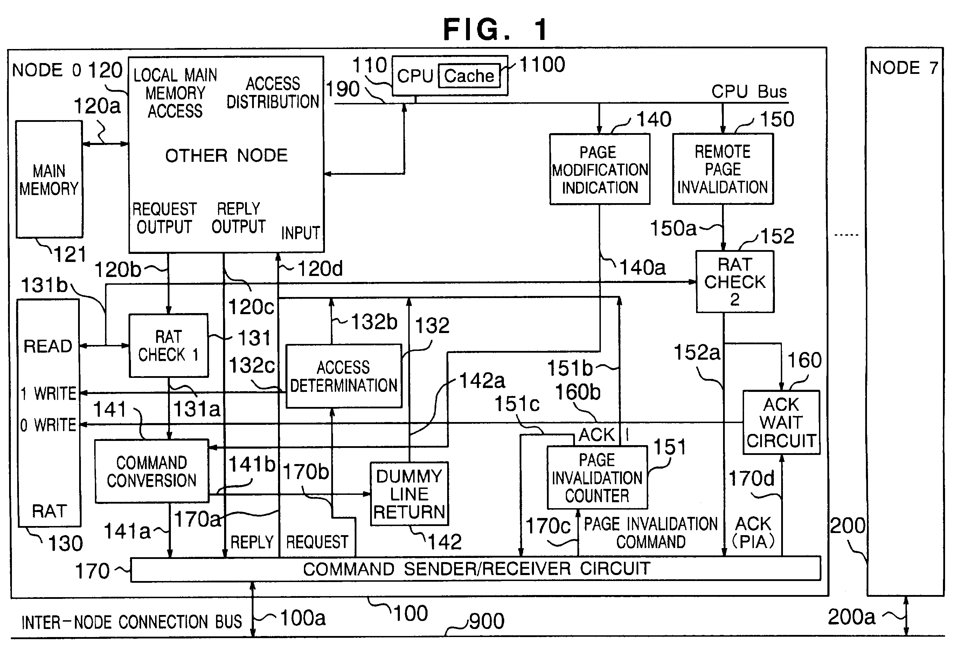

Hereinafter, a main memory sharing multiprocessor according to the present invention will be described in further detail with reference to Figs. 1 to 9.

### [Embodiment]

### (1) Outline of System:

Fig. 1 is a block diagram of a main memory sharing type multiprocessor according to the present invention. This system is an eight-node system, and a plurality of nodes 100, 200 (which will be called "node 0 to node 7" in some cases), for example, are connected by a bus 900. Each node has the same construction. In other words, each node comprises a CPU 110, a (partial) main memory 121, an internal bus 190, and so forth.

The main memory 121 constitutes a part of the common main memory of this system, and holds the program executed by each node and a part of data. This system is a NUMA type parallel computer system. The CPU includes a local cache 1100. The CPU and the node are shown connected by the bus in the drawing, but connection systems other than the bus, such as one-to-one connection or connection by a switch can be used, too. These internal and external connection methods and a protocol for cache management are known in the art. Therefore, the internal construction will not be explained hereby in detail.

A circuit 120 is an access distribution circuit that receives the bus command sent from the CPU and distributes this command.

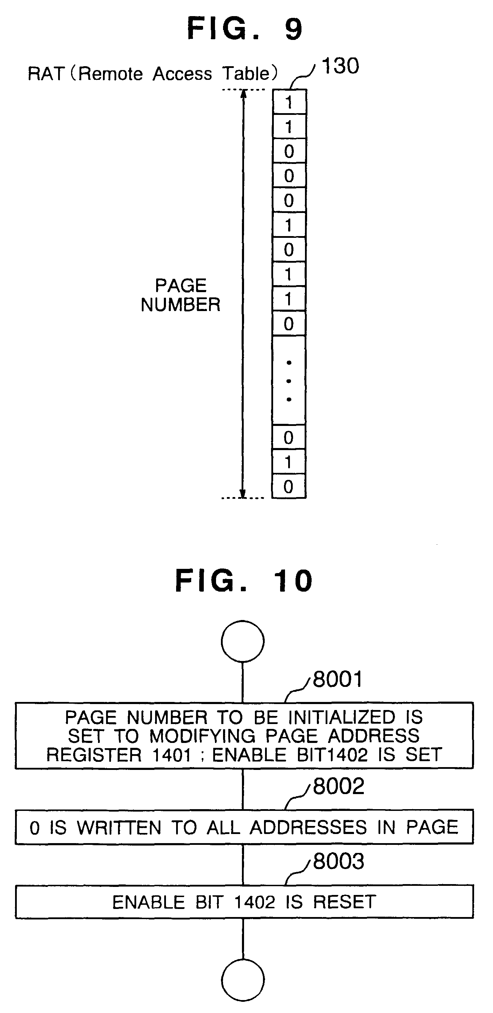

A circuit 130 is an RAT (Remote Access Table) for storing whether or not each page of the main memory 121 inside the node is exclusive or shared, for each page. A circuit 131 checks the RAT for the access to other nodes outputted by the CPU inside the node and judges whether or not the command is to be delivered. A circuit 132 is the one that re-writes the RAT for the page accessed by other nodes to the shared state. Fig. 9 shows the construction of the RAT. The RAT is accessed by the page number. RAT = 0 represents the exclusive state and RAT 0 does the shared state. All the bits of the RAT are set to the exclusive state when the system is activated.

Turning back again to Fig. 1, a circuit 140 is a page modification indication register for instructing to hardware that the CPU inside the local node is executing a block page write process. The page number is written by the software (OS, etc) of the CPU. The register comprises the modifying page address 1401 in block write and an "enable" bit 1402 representing that the written value is valid.

In Fig. 1, further, a command conversion circuit 141 converts an access request command from the CPU 110 for the pages in the block write process. An access determination circuit 142 is the circuit that returns a dummy data to the access request from the CPU 110 for the pages in the block write process. These circuits 130, 131, 132, 140, 141 and 142 are those which are peculiar to the resent invention.

A circuit 150 is a remote page invalidation circuit for instructing the page of the main memory inside the node to purge the data stored in the caches of other nodes from them. When the CPU uses up the pages such as the release of the pages, finish of the process, and the like, in the remote page invalidation circuit 150, the page number is written by the software (OS, etc). A circuit 152 is an RAT check circuit 2 that judges whether or not the page invalidation command is necessary, by checking the RAT. A circuit 151 is a page invalidation counter that receives a page invalidation command (PI) 170c from other nodes and invalidates the data of the page cached in the cache 1100 of the CPU of this node. A circuit 160 is an ACK wait circuit that judges completion of page invalidation and returns the RAT to the exclusive state. These circuits 150, 152, 151 and 160, too, are those which are peculiar to the present invention.

A circuit 170 is a command sender/receiver circuit that sends and receives the commands with the inter-node bus. The detailed explanation of this circuit 170 will be omitted because it is well known in the art.

### (2) Explanation of Bus Command:

The cache 1100 of the CPU supports a snooping cache mechanism. The following five commands are used on the buses inside and outside the node so as to keep cache coherence. Parentheses represent symbols used in this embodiment.

### • Fetch (F)

This command requests line transfer of the data. It is generated when a read command of the CPU fails.

### • Fetch & Invalidate (FI)

This command requests the line transfer of the data and invalidation of the data on other caches. It is generated when the write command of the CPU fails.

### • Invalidate (I)

This command requests invalidation of the data on other caches. It is generated when the CPU generates the write request for the cache line that is shared by other caches.

### • Data (D)

This is the reply to the F and FI commands, and transfers the accessed data to the original accessing CPU.

### • Write-Back (WB)

This command requests write-back of the cache line, and is generated when the data is purged by replace.

### • Page Invalidation (PI)

This command requests all the other nodes to purge all the lines contained in the designated page from the caches. This is a command peculiar to the present invention.

### • Page Invalidation ACK (PIA)

This command reports the requesting node that the execution of the PI command is complete. This is a command peculiar to the present invention.

The address is transferred on the bus together with the command, and the data (cache line) is also transferred in the case of the WB and D commands.

### (1) Operation for Access from CPU:

Hereinafter, the operations for the access from the CPU will be explained dividedly and serially.

### (A) Basic operation:

First, the basic operation for the bus command described in the item (2) will be described. It will be assumed hereby that nothing is set to the block write page indication registor 140 and the remote page invalidation circuit 150. The operations other than the one relating to the RAT are those of the snooping caches of the conventional bus base and are known technologies.

### (A1) F command:

When any cache miss occurs for the read request of the CPU, the F command is transmitted to the access distribution circuit 120 through the internal bus 190. The circuit 120 judges whether the access address belongs to the main memory 121 of the local node (whether it is local) or belongs to the main memory of other node (or remote). In either case, the F command is outputted from the requested output 120b and is transferred to the RTA check circuit 1 (131).

### (A1-1) F Command to local main memory:

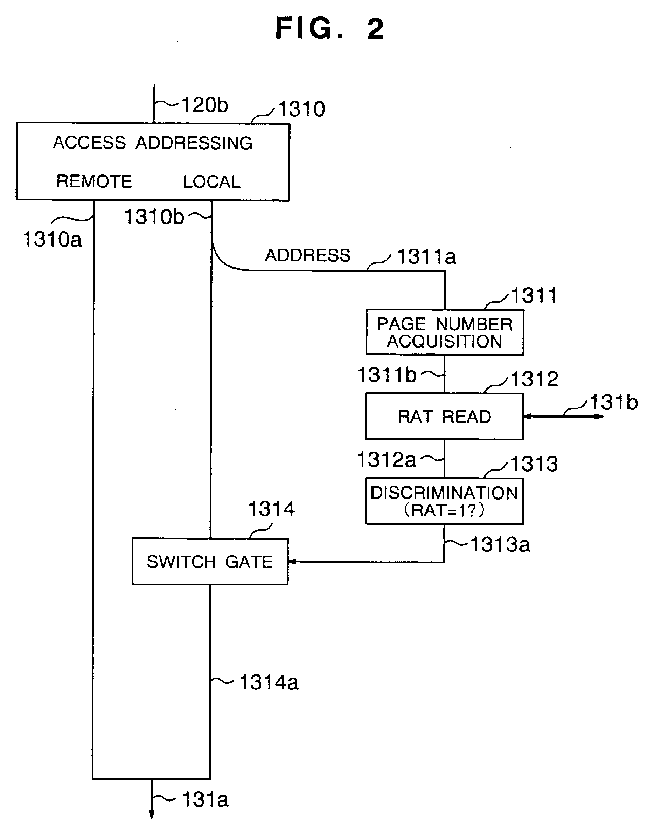

Fig. 2 shows in detail the RAT check circuit 1 (131). In this case, an access address distribution circuit 1310 outputs the F command to the local side 1310b. A page number acquisition circuit 1311 acquires the page number from the access address 1311 in the command, an RAT read circuit 1312 reads out the RAT value of the accessed page, and a value determination circuit 1313 judges whether the accessed page is exclusive or shared.

### (A1-1-1) When RAT is shared (RAT = 1):

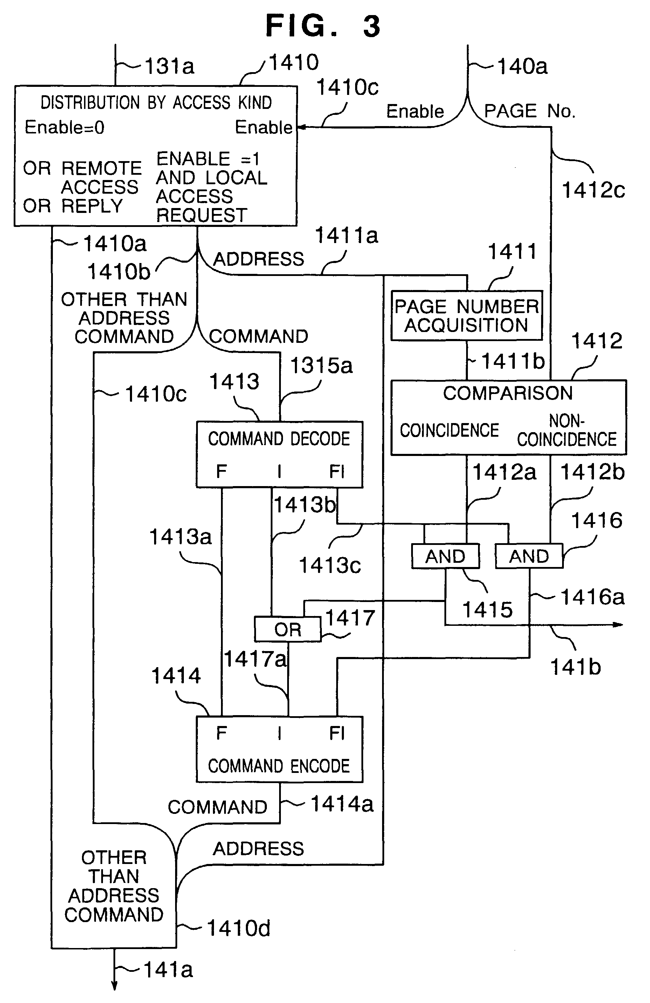

When the accessed page is shared, the F command is outputted to 131a through a switch gate 1314. Fig. 3 shows the detail of the command conversion circuit 141. In this case, since nothing is set to the page modification indication register 140, the Enable bit 1402 is 0 and the signal 1410c is 0. Therefore, the F command is outputted as such to 141a through the circuit 1410 and the signal 1410a. The command sender/receiver circuit 170 outputs the F command to the bus 900 and other nodes receive the F command.

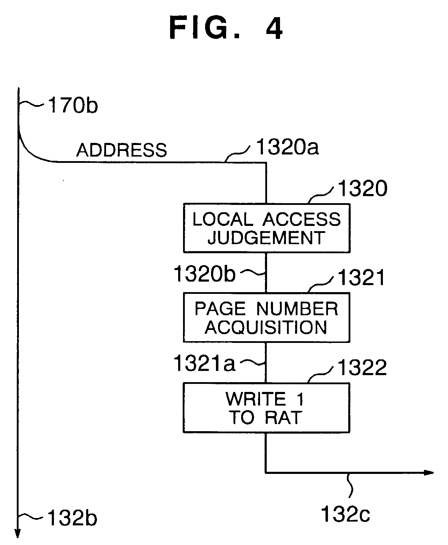

In the node that receives the F request command, the command sender/receiver circuit 170 outputs the F command to the signal 170b. The F command is transferred to the access determination circuit 132. Fig. 4 shows in detail the access determination circuit 132. The F command is transferred to the signal 132b and at the same time, the address is inputted to the local access determination circuit 1320. Because the accessed address is the local main memory of the access requesting node but is not the local address of this node, 132 does nothing in this case. The F command outputted to 132b is transferred to the CPU 110 through the circuit 120 and the bus 190. The CPU checks if the data of the fetched address is cached to the local cache 1100 under the exclusive state.

### (A1-1-1-1) When cached under exclusive state in CPU of other node:

The cache line inclusive of the accessed data is transferred as the D command to the bus 190 and the circuit 120. Since the D command is the reply, the D command returns the data to the access requesting node through the circuit 120, the signal 120c, the circuit 170 and the inter-node bus 900. The access requesting node returns the data accessed through the circuit 170, the signal 120d, the circuit 120 and the bus 190 to the original access requesting CPU 110. By the procedures described above, the data requested by the F command is supplied by inter-cache data transfer from the cache of other node.

### (A-1-1-1-2) When not cached under the exclusive state in CPU of any other nodes:

In this case, the D command is not returned from any CPU. Judging that the D command is not returned from any CPU, the access distribution circuit 120 of the access requesting CPU reads out the cache line from the main memory 121 of the local node. The circuit 120 returns the data that is accessed by the CPU 110 through the bus 190. In consequence, the data requested by the F command is read out from the main memory of the local node.

### (A-1-1-2) When RAT is exclusive (RAT = 0):

When the accessed page is exclusive, the switch gate 1314 in the RAT check circuit 131 restricts the output of the F command to outside. Therefore, the command is not outputted to other nodes and quite naturally, the return of the data from other nodes does not exist, either.

Consequently, the access distribution circuit 120 reads the data of the main memory 121 of the local node in the same way as in the case (A1-1-1-2) and returns it to the CPU 110 through the bus 190.

### (A1-2) F command to remote main memory:

In this case, the RAT check circuit 131 outputs as such the F command to the remote to the signal 131a through the circuit 1310 and the signal 1310a. The F request for the remote is outputted as such in the command conversion circuit 141, too, from the circuit 1410 to the signal 141a through the signal 1410a. Thereafter, the command is transferred to other nodes and whether or not the data accessed by the other node is cached by the CPU cache is checked in substantially the same way as in the case of (A1-1-1).

Here, the difference from (A1-1-1) resides in the operation of the access determination circuit 132 in the home node (that is, the node having the address of the accessed data on the main memory). In this case, a local access determination circuit 1320 in the home node judges that the accessed address is the local address, and outputs the access address to the signal 1320b. A page number acquisition circuit 1321 transfers the page number of the access address to the circuit 1322. This circuit 1322 writes "1" to the bit corresponding to the accessed page of the RAT 130. In this way, the status of the page accessed from other nodes can be changed from the exclusive state to the shared state.

### (A1-2-1) When cached under exclusive state in CPU of other nodes:

In this case, the cache line inclusive of the accessed data is returned by the inter-cache data transfer by using the D command in the same way as in the case (A1-1-1-1).

### (A1-2-2) When not cached under exclusive state in CPU of any nodes:

In this case, the D command is not returned from any nodes other than the home nodes. Judging that the D command is not returned from other nodes and is not returned, either, from the CPU of the home node, the access distribution circuit 120 of the home node reads out the line inclusive of the accessed data on the main memory 121 of the home node, and outputs the D command to the signal 120c. Thereafter, the D command is returned to the access requesting CPU in the same way as in the case (A1-1-1-1). In this way, the data on the main memory of the home node can be read out.

### (A2) FI command:

If any cache miss occurs in the write process of the CPU, the FI command is outputted. The remote access operation in this case is substantially the same as that of the F command of the case (A1). The difference lies in that the data on the caches of the CPUs of other nodes are invalidated after the data transfer between the caches is made.

### (A3) I command:

When write occurs for the data under the shared state on the caches of the CPUs, the I command is outputted. This I command is transferred to the RAT check circuit 1 (131) through the internal bus 190 and the access distribution circuit 120. This circuit checks the RAT value in the same way as in the case (1-1).

### (A3-1) When RAT is shared (RAT = 1):

When the accessed page is shared, the I command is outputted to 131a through the switch gate 1314. In this case, too, nothing is set to the page modification indication register 140. Therefore, the enable bit 1402 is 0, and the signal 1410c in the circuit 141 is 0. For this reason, the I command is as such outputted to 141a through the circuit 1410 and the signal 1410a. The command exchange circuit 170 outputs the I command to the bus 900, and other nodes receive the I command.

Receiving the I request command, the node outputs the I command to the signal 170b. The I command is transferred to the access determination circuit 132.

The access determination circuit 132 checks the access address in the same way as in the case of the F command. In the home node of the address accessed by the I command, "1" is written into the RAT whereas nothing is done in nodes other than the home node.

The I command that is outputted to 132b is transferred to the CPU 110 through the circuit 120 and the bus 190. The CPU invalidates the cache line designated by the I command.

### (A3-2) When RAT is exclusive (RAT = 0):

When the accessed page is exclusive, the switch gate 1314 in the RAT check circuit 131 restricts the output of the F command to the outside. Therefore, the I command is not outputted to other nodes.

### (A4) WB command:

When a replace occurs in the cache 1100 of the CPU 110, the cache line that is purged is transferred by the WB command to the access distribution circuit 120 through the bus 190. The access distribution circuit 120 judges if the accessed address is local or remote.

### (A4-1) When WB command is for local:

The access distribution circuit 120 writes back the cache line to the main memory 121 inside the local node.

### (A4-2) When WB command is for remote:

The access distribution circuit 120 transfers the WB command to the RAT check circuit 1 (131) through the signal 120b. Since the command is the remote access, this circuit transfers the command as such to the signal 131a and to the command conversion circuit 141. The command conversion 141, too, transfers the WB command as such to the signal 141a because it is the WB command for remote. Then, the WB command is transferred to the home node through the command sender/receiver circuit 170 and the inter-node bus 900.

Receiving the WB command, the home node transfers the WB command to the access determination circuit 132 through the command sender/receiver circuit 170 and the signal 170b. Because the WB command is the access to the local, the local access determination circuit 1320 in the access determination circuit 132 outputs the address, that is written back (WB), to the page number acquisition circuit 1321. The circuit 1322 writes "1" (shared) to the bit corresponding to the accessed page of the RAT 130. At the same time, the WB command is transferred to the access distribution circuit 120 through the signal 132b. The access distribution circuit 120 writes back the cache line to the main memory 121.

WB to other nodes is executed by the procedures described above.

### (A) When Block Write Page Is Designated:

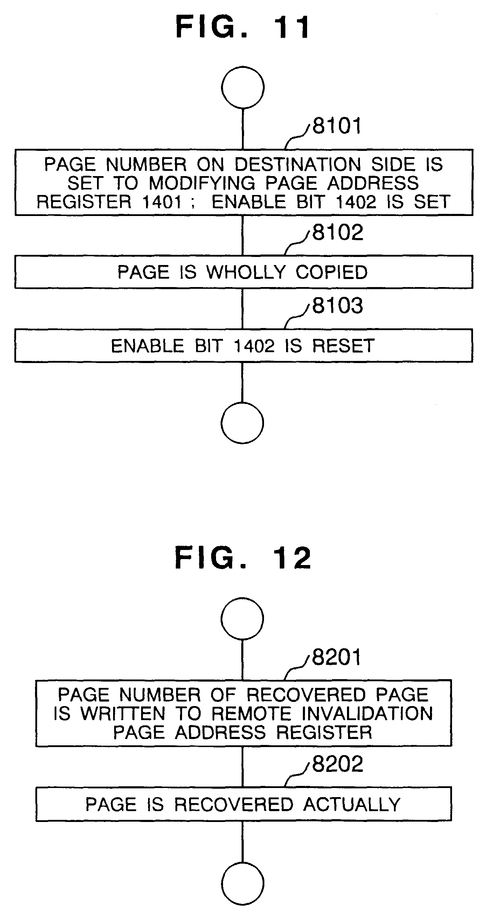

Next, a process system will be explained when the OS and the middle-ware execute the write operation to the whole page (page block write) such as page initialization to the page of the main memory inside the local node. Fig. 10 shows the process flow when the OS initializes the page while Fig. 11 shows the process flow when the OS executes page copy. It will be hereby assumed that the page for which block write is executed always exists on the main memory of the local node in order to improve locality of the data access.

Prior to page initialization, the OS writes the page number, that is to be initialized, to a block write page address register and "1" into the enable bit 1402 (step 8001). The OS then writes "0" into all the words inside the page (step 8002). When initialization is completed, the OS writes "0" into the enable bit 1402 (step 8003).

In the case of page copy, too, the OS writes the page number of the copy destination side (the data write side) to the block write page address register before executing the page copy operation and "1" to the enable bit 1402 (step 8101). The OS then executes the page copy (step 8101) and finally writes "0" to the enable bit 1402 (step 8103).

In this case, the routines shown in Figs. 10 and 11 are accomplished by a system call in the same way as an algorithm for executing copy and clear of the page by the middle-ware. In this case, a routine for converting the address from the virtual address to the actual address and for checking page protection is interposed before the process shown in Figs. 10 and 11.

The following description will explain in detail how the hardware operate when the page write operation is made at the steps 8001 and 8101.

When initialization, page copy, etc, are executed, the write access occurs to the page inside the corresponding page. The following three cases are possible at this time depending on the status of the cache 1100 of the CPU.

### (B1) When line under exclusive state is hit:

It is only necessary to execute write to the line on the cache 1100.

### (B2) When line under shared state is hit:

The CPU generates the I command. The I command is transferred to the RAT check circuit 1 (131) in the same procedure as the case (A3), and the RAT value is checked. (B2-1) When RAT is shared (RAT = 1):

When the accessed page is shared, the I command is outputted to 131a through the switch gate 1314 and is transferred to the circuit 141. Since the enable signal 1410c is "1" and the access request is the local access request, the access request is outputted to 1410b. Here, the access request is divided into the address (1411a), the command (1315c) and others (1410c). The page number portion is segmented from the address (circuit 1411) and is compared with the block write page address 1401 transferred by the signals 140a and 1412c (comparator 1412). The circuit 141 processes this comparison result (1412a, 1212b) and the decode result (1413a, 1413b, 1413c) of the command by a decoder 1413 and decides the command that is to be outputted. Since the input is the I command in this case, only the signal 1417a becomes active because the signal 1413b is active, and the I command is again outputted by a command encoder 1414 (the result from the comparator 141 is not used in the case of the I command). Therefore, the I command which is the same as the original I command is outputted from the signal 141a. The subsequent operation is the same as the case (A3-1), and the data cached to other nodes are invalidated.

### (B2-2) When RAT is exclusive (RAT = 0):

In this case, the I command is not outputted from the RAT check circuit in the same way as in the case (A3-2).

### (B3) When CPU cache fails:

The CPU generates the FI command. This FI command is transferred to the RAT check circuit 1 and the RAT value is checked in the same way as in the case (A1-1).

### (B3-1) When RAT is shared (RAT = 1):

Since the enable is "1" and the access request is the access request for the local address in this case in the same way as 1(B2-1), the access command is outputted to 1410b. Thereafter, comparison of the page numbers (circuit 1412) and decoding of the command (1413) are executed. In this case, the page number in the present access is written at the step 8001 or 8101 to the block write page address 1401. Therefore, the access page number 1411b is coincident with the page number 1412c. In consequence, the signal 1412a and the signal 1413c (representing the FI command) become active, and the signal 141b becomes active, too.

Therefore, the I command is outputted to the signal 141a through the gate 1417, the signal 1417a and the command encoder 1414, so that the FI command is converted to the I command in the command conversion circuit 141. Thereafter, the data cached to other nodes are invalidated by the I command in the same way as in the case (A3-1).

The circuit 142 becomes active through the signal 141b in parallel with the output of the I command, and a dummy line is outputted to the signal 142a. (In this case, it is insured that the data contained in the returned cache line are all over-written. Therefore, the data contained in the dummy line are arbitrary; for instance, the line having the data ALL 0 is used.) The dummy line is sent back to the CPU 110 through the signal 120d, the circuit 120 and the internal bus 190.

During the initialization or page copy process, the procedures described above make it possible to return the data without executing the data transfer from other nodes for the FI command for the page for which block write is executed. Furthermore, the data cached to other nodes can be invalidated by sending the I command. Cache coherence can thus be maintained.

### (B3-2) When RAT is exclusive (RAT = 0):

In this case, the FI command is not outputted from the RAT check circuit in the same way as in the case (A1-1-2). (B4) When access is made to areas other than the object page of block write:

Here, the operation of the command conversion circuit 141 for the access from the CPU to areas other than the page, for which block write is made, will be explained supplementarily. When the access to areas other than the page under initialization arrives at the circuit 141, the comparison result of the comparator 1412 is non-coincident and the signal 1412b becomes active. Because the output of the command decode circuit 1413 is as such transferred to the command encode circuit 1414, command conversion is not executed. The signal 141b is inactive, and send-back of the dummy line is not executed, either.

Therefore, the command conversion circuit 141 does not at all affect the access to areas other than the page set to the block write page address register 1401, and the access can be made as usual. Therefore, the system operates normally even when other areas are accessed in parallel with page initialization, page copy, and so forth, on the ground that the node has the multiprocessor construction.

### (C) Then remote page invalidation is indicated:

Finally, the explanation will be given on the process when the application, etc, uses up the page, and the OS, the middle-ware, etc, recover the page of the main memory inside the local node. When locality of the data access is taken into consideration, the processor that recovers the page must essentially be the home node. Fig. 12 shows the process flow when the OS recovers the page.

Prior to recovery of the page, the OS writes the page number of the page, that is to be recovered, to the remote invalidation page address register 1501 (step 8201), and then recovers actually the page (that is, it executes a process for putting the recovered page into a free page list, etc; step 8202). In this case, the routine shown in Fig. 12 is accomplished by the system call in the same way as the page recovery algorithm by the middle-ware. In this case, a routine for executing address conversion from the virtual address to the actual address is interposed before the process shown in Fig. 12.

Next, the explanation will be given in detail how the hardware operates when the write is made to the remote invalidation page address register 1501 at the step 8201 described above. When the write is made to the remote invalidation page address register 1501, the circuit 1502 first generates the PI command for the page to be recovered, and this command is transferred to the RAT check circuit 2 (152) through the signal 150a. At the same time, the output of this PI command is reported to an ACK wait circuit 160 through the signal 150a.

First, the operation of the PI command will be explained. The RAT check circuit 2 (152) is analogous to the RAT check circuit 1 (131) (see Fig. 2). In this case, however, the access address distribution circuit 1310 is omitted because the access address is always the local address in this case (the input signal 150a is immediately connected to a signal corresponding to the signal 1310a in the circuit 152). The circuit 152 checks the value of the RAT corresponding to the recovered page, and restricts the output of the PI command if the RAT is exclusive. If the RAT is shared, the circuit 152 sends the PI command to the command sender/receiver circuit 170 through the signal 152a. The command sender/receiver circuit 170 sends the PI command to all the other nodes through the inter-node bus 900.

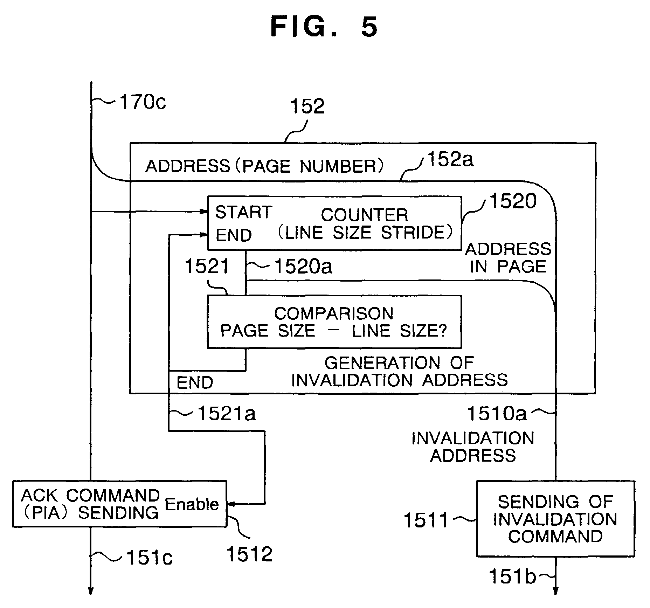

Next, the operation of each node that receives this PI command will be explained. The PI command is sent to a page invalidation counter 151 through the command sender/receiver circuit 170. Fig. 5 shows the construction of this page invalidation counter. The page invalidation counter 151 comprises an invalidation address generation circuit 152, an ACK command (PIA command) generation circuit 1512 and an invalidation command sender circuit 1511. When the PI command arrives, a counter 1520 inside the invalidation address generation circuit 152 is triggered, and this circuit serially starts count-up from 0 in the stride of a line size. The output of this counter 1520 is sent as an inter-page address 1520a to the invalidation command sender circuit 1511 together with the page number 152a sent by the PI command. The invalidation command sender circuit 1511 generates the I command for the address sent by the signal 1510a. The I command so generated is sent to the CPU 110 through the signal 151b, the signal 120d, the access distribution circuit 120 and the inter-node bus 190. In this way, the I command for the first line of the page is sent, and this line is invalidated. The counter 1520 continues to count-up in the stride of the line side, and the invalidation command sender circuit 1511 serially sends the I command to each line inside the page in response to the count-up operation. When the output 1520a of the counter reaches [page size - line size] (that is, when the last line of the page is reached), the comparison circuit 1521 activates an end signal 1521a, and sending of the I command is completed. The procedures described above invalidate all the lines inside the page designated by the PI command.

When the end signal 1521a becomes active, an ACK command (PIA) sender circuit 15121 is rendered "enable", and the PIA command for the page designated by PI is sent to the signal 151c. The PIA command is returned to the access requesting node (the node that recovers the page) through the command sender/receiver circuit 170 and the inter-node bus 900.

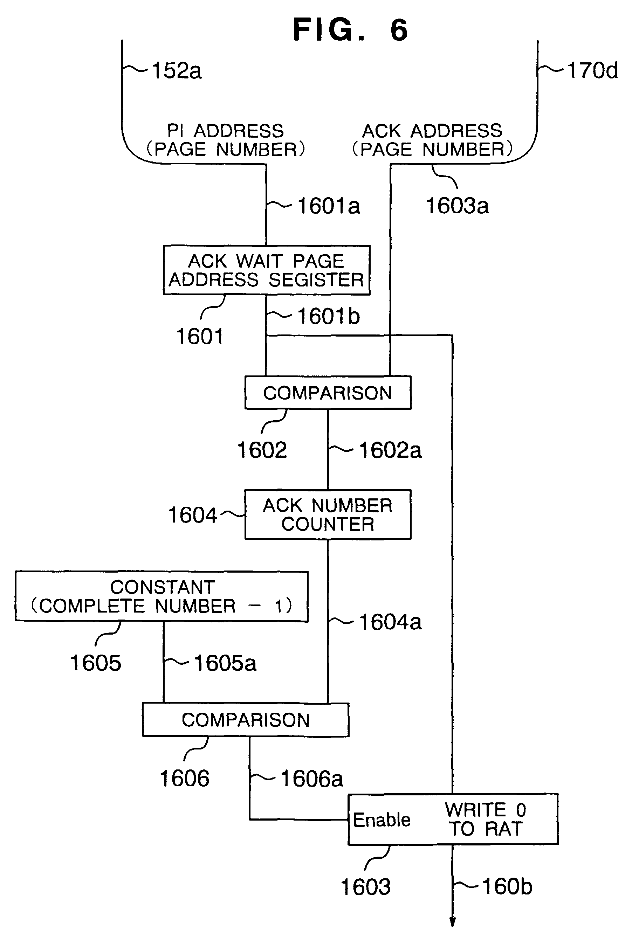

Next, the process of the access requesting node after sending of the PI command will be described. In the access requesting node, sending of the PI command is reported to the ACK wait circuit 160 through the signal 152a. Fig. 6 shows in detail the ACK wait circuit 160. When the PI command arrives, the page number (the recovered page number) is held by an ACK wait page address register 1601 to wait for the arrival of the PIA command. When the PIA command arrives from other nodes, the command is sent to the ACK wait circuit 160 through the command sender/receiver circuit 170 and the signal 170d. The ACK wait circuit compares the address (page number) 1603a of the PIA command with the content of the ACK wait page address register 1601 (circuit 102). When the addresses (page numbers) are found coincident as a result of this comparison, the ACK number counter 160 is counted up. In this way, the number of the PIA commands sent back for the PI command can be counted. The output of the ACK number counter 1604 is compared with the value (1605) which is smaller by one than the total node number inside the system (comparator1606). In this way, the arrival of the PIA from all the other nodes (or in other words, the finish of the invalidation process of the page requested by the PI in all the other nodes) can be judged. When the PIA command arrives from all the other nodes, the signal 1606a becomes active, and the circuit 1603 so operates as to write "0" to the bit of the corresponding page of the RAT 130 through the signal 160b. In this way, the status of the corresponding page can be returned to the exclusive state.

The process described above makes it possible to invalidate all the data held on the caches of all the other nodes for the page recovered by the OS, etc, and to return the page to the exclusive state (the state where the page does not exist on the caches of any other nodes). Therefore, when the node later clears the page and uses it, the page can be accessed without generating the cache coherence command to other nodes.

### [Modified Embodiments]

The present invention is not particularly limited to the embodiment described above but can be changed or modified in various ways. Some modified embodiments will be given next.

### (1) Purge of data from other caches by FLUSH:

In the embodiment described above, the invalidation command is used to purge the data of the page used up by the program from the caches of other nodes. In this case, because the "dirty" data that has been cached previously are discarded, there is the merit that the useless inter-node data transfer can be avoided. Since the data on the page that is released is not preserved, the system software must ensure that the data on the released page are not accessed any more. (Generally, the data of the page that is once released is never accessed.)

In contrast, it may be possible to use the FLUSH command as means for purging the data from the caches of other nodes. The term "FLUSH command" used hereby means the command that requests to invalidate the data on the cache and to write back the data to the main memory when the cache line is changed. In this case, there occurs the problem that since the changed data on the cache are all written back to the main memory of the home node, the traffic between the nodes increases (to the same level as in the prior art system). However, because the data of the released page are completely preserved, the protocol by FLUSH must be used by optimizing the page reclaim of the OS, etc. if there is the possibility that the data of the page that is once released are used once again. In this case, too, the status of the page of the RAT can be returned to the exclusive state.

When FLUSH is used, too, the system can be accomplished by the hardware that is substantially equal to that used for the embodiment described above. The portion that must be modified is only the portion 1511 of the page invalidation counter 151 for outputting the I command, and this portion 1511 is to be modified in such a manner as to output the FLUSH command.

It is further possible to use a method that has two functions of invalidation and FLUSH and uses them in accordance with the attributes of the released page (to use FLUSH for only the data having the possibility of re-utilization). In this case, it is necessary only to add a signal for distinguishing invalidation from FLUSH to the remote page invalidation circuit 150 and the page invalidation counter 151.

### (2) System for executing zero-clear of page by hardware:

The systems described above only invalidate the data cached to other nodes when the page is released, and zero-clear of the page must be executed by software. (Since the page is exclusive, initialization can be executed only inside the nodes.) In contrast, if zero-clear of the page, too, is executed by the hardware, the later trouble of clearing the page by the OS can be eliminated, and a higher processing speed can be accomplished.

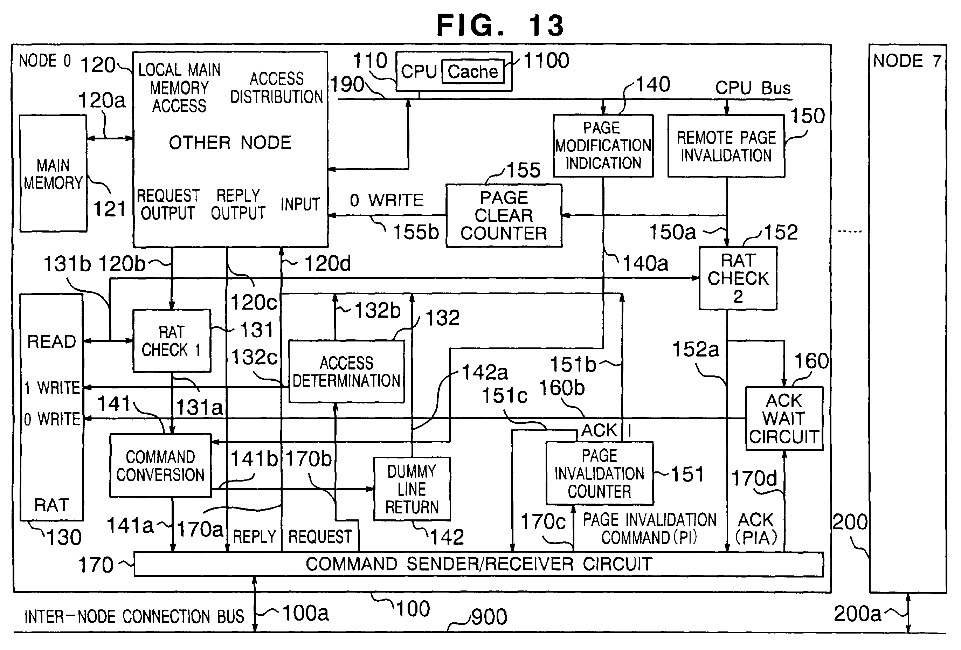

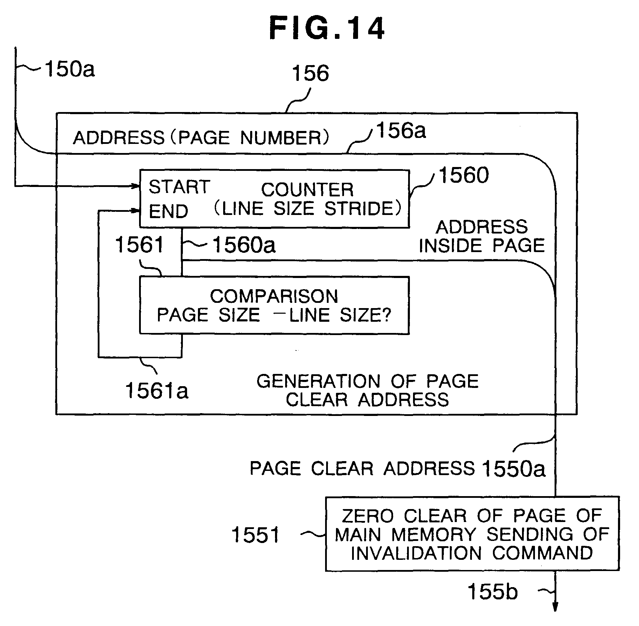

Figs. 13 and 14 show the construction when zero-clear is executed by the hardware. Fig. 13 shows the overall construction of a main memory shared type multiprocessor. The difference of this processor from the processor shown in Fig. 1 is that each node has a page clear counter 155. When the OS, etc, recovers the page placed inside the main memory of the local node and the remote page invalidation register is set in each processor, the page invalidation command is sent to the page clear counter 155 (which must operate irrespective of the RAT value.)

Fig. 14 shows in detail the page clear counter 155. The outline of the operation of the page clear counter 155 is the sane as the operation of the page invalidation counter 151 shown in Fig. 5. The counter 156 in the page clear address generation circuit generates the address of each line inside the page and sends it to the circuit 1551. The circuit 1551 writes ALL 0 to the line on the corresponding main memory and at the same time, generates the command for invalidating the cache 1100 in the node. (These commands are sent to the main memory 121 and the CPU 110 by the access distribution circuit 120.) The page clear counter 155 can execute zero-clear of the content of the page designated by the remote page invalidation circuit 150.

The process described above makes it possible to execute the zero-clear of the content of the released page by the hardware when the page is released. Therefore, the software overhead can be drastically reduced when the page is later allocated. Furthermore, because the data on the caches of other nodes are collectively invalidated for each page, the bus traffic between the nodes does not increase.

### (3) Inter-node multiprocessor:

In the explanation given above, the number of the CPU inside the node is only one, but each node may have a multiprocessor construction. In such a case, a plurality of page modification indication registers 140, remote page invalidation circuits 150 and ACK wait circuits 160 must be provided in the same number as the number of CPUs.

### (4) Utilization of external cache inside node:

In the explanation given above, the cache is provided to only the CPU inside the node, but an external cache may be provided to the CPU in each node. In this case, if the generic relation can be established between the external cache and the CPU cache, the number of invalidation commands can be decreased by using the information of TAG of the external cache.

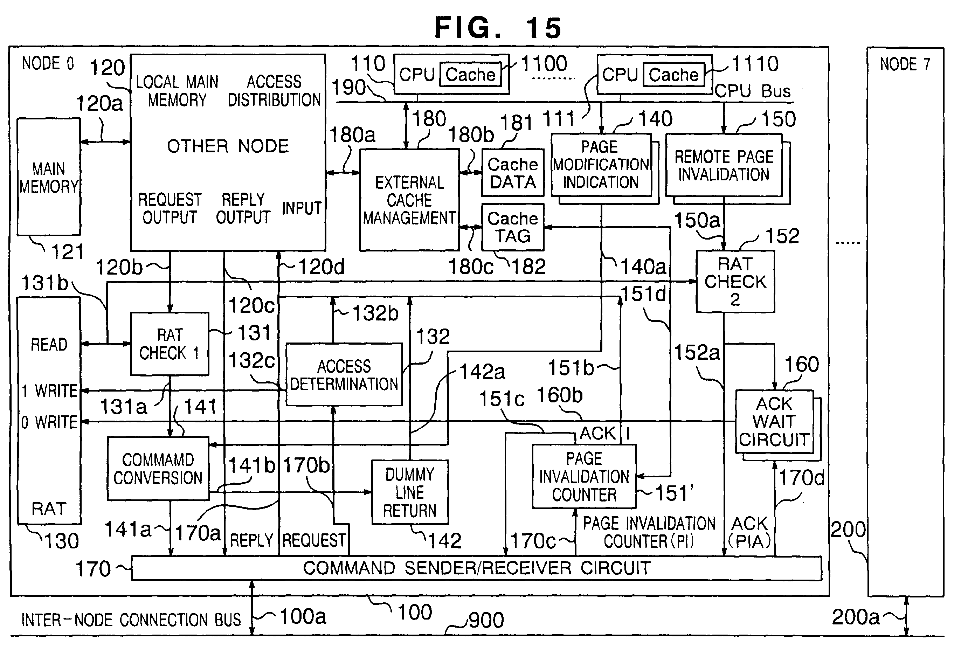

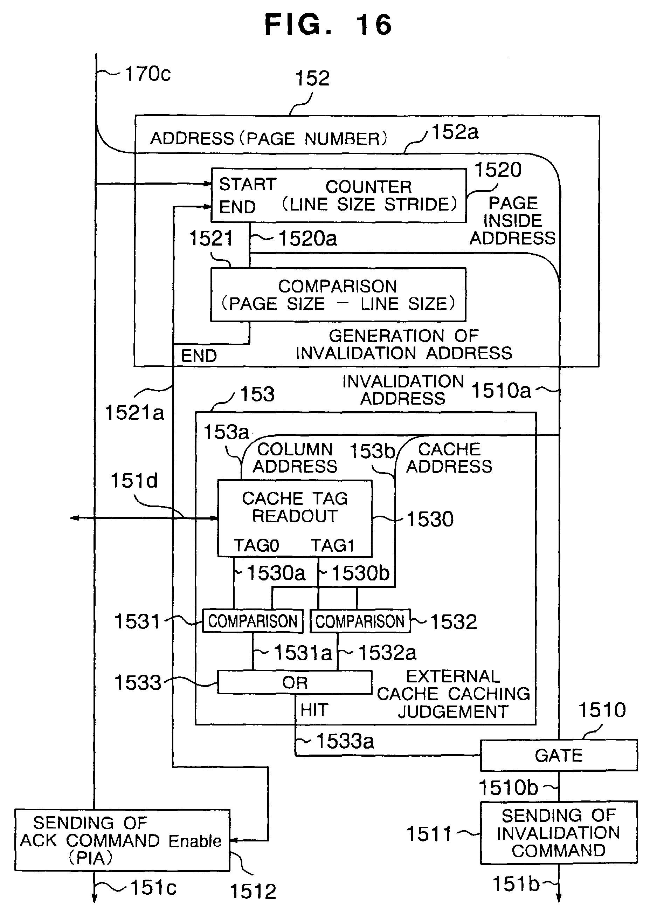

The construction when the cache is provided inside the node will be explained with reference to Figs. 15 and 16. Fig. 15 shows the overall construction of the main memory shared multiprocessor. Each node has an external cache management circuit 180, a cache data 181 and a cache TAG 182, and the page invalidation counter 151 gains access to the cache TAG 182 by 151d. This is the difference from the construction shown in Fig. 1. Since the operation of the cache management circuit 180, etc, is known in the art, the explanation in detail will be omitted. Fig. 15 shows also the inter-node multiprocessor construction described in the item (3), and the same number of page modification indication registers 140, remote page invalidation circuits 150 and ACK wait circuits 160 as the number of CPUs are provided.

Fig. 16 shows the construction of a page invalidation counter 151'. This circuit 151' conducts substantially the same operation as the page invalidation counter 151 shown in Fig. 5 but is different from the latter in that it includes an external cache caching determination circuit 153 and a gate 1510. An address 1510a for generating the invalidation command outputted from an invalidation address generation circuit 152 is inputted to the external cache caching determination circuit 153, and whether or not the data of the address corresponding to the external cache is registered is checked. The external cache caching determination circuit 153 reads out the tag 182 of the external cache (circuit 1530) by using a column address and compares it with the high order cache address 153b of the invalidation command (circuits 1531 and 1532). Here, the external cache is hereby assumed as a 2-way set associative cache, but other constructions may be used, too. When any of the addresses is found coincident as the result of comparison and the data is judged as existing on the cache, the gate 1510 is turned ON and the invalidation command is sent. If the result of either comparison proves non-coincident and the data having the corresponding address is not judged as existing on the cache, the gate 1510 is turned OFF, and the output of the invalidation command is restricted.

By the means described above, the output of the unnecessary invalidation command can be suppressed by utilizing the information of the TAG of the external cache during the page block invalidation.

### (5) Designation by address range:

In the explanation given above, the address is designated for each page in the block write page indication register 140 and the remote page invalidation circuit 150, but an architecture for designating the address range of the boundary of arbitrary pages can be employed, too.

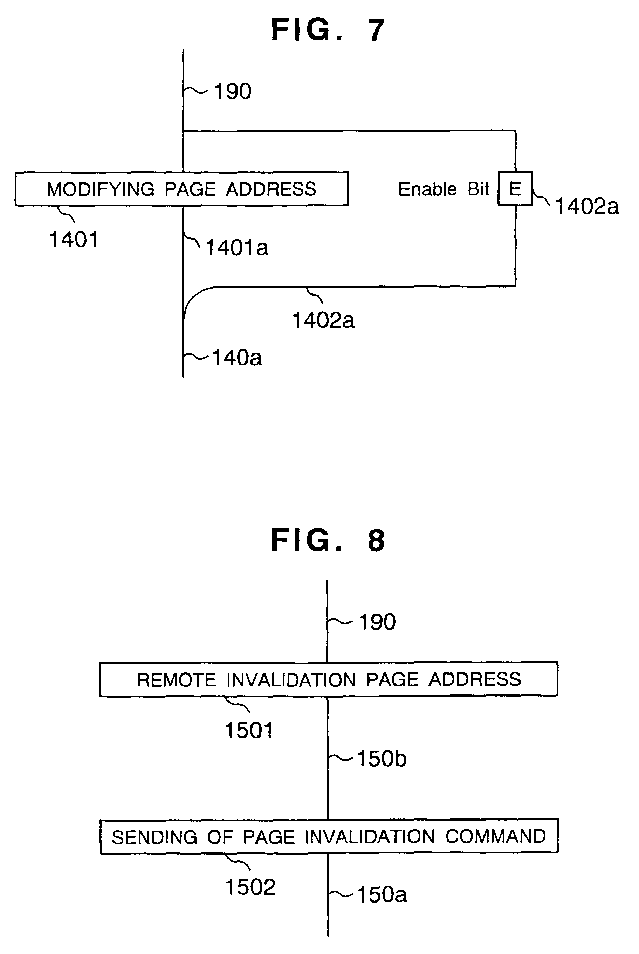

In such a case, the following points are to be changed.
(a) In the inspection of the RAT in the RAT check circuit 2 (152), the state can be set to the exclusive state only when the pages inclusive of the designated range are all under the exclusive state.
(b) When the RAT is returned to the exclusive state in the ACK wait circuit 160, only those pages which are completely contained in the designated range can be returned to the exclusive state.
(c) The address range of the application utilizing the cache mechanism of the present invention is a real continuation (which is the possible premise in the scientific and technical computation).
(d) The block write page address register 1401 and the remote invalidation page address register 1501 shown in Figs. 7 and 8 become a set of two registers representing the lower limit and the upper limit of the designated range.
(e) The check procedure as to whether or not the address is contained in the page in the command conversion circuit 141 and the page invalidation counter 151 becomes the check procedure as to whether or not the address is contained in the designated range.

Because the changes described above are obvious to those skilled in the art, the detailed explanation will be omitted.

Furthermore, when the block invalidation of the remote page is designated by the address range and furthermore, when each node has the external cache, generation efficiency of the invalidation command can be drastically improved, when the designated address range is greater than the range of the column address of the cache, by checking in parallel a plurality of ways in the page invalidation counter 151".

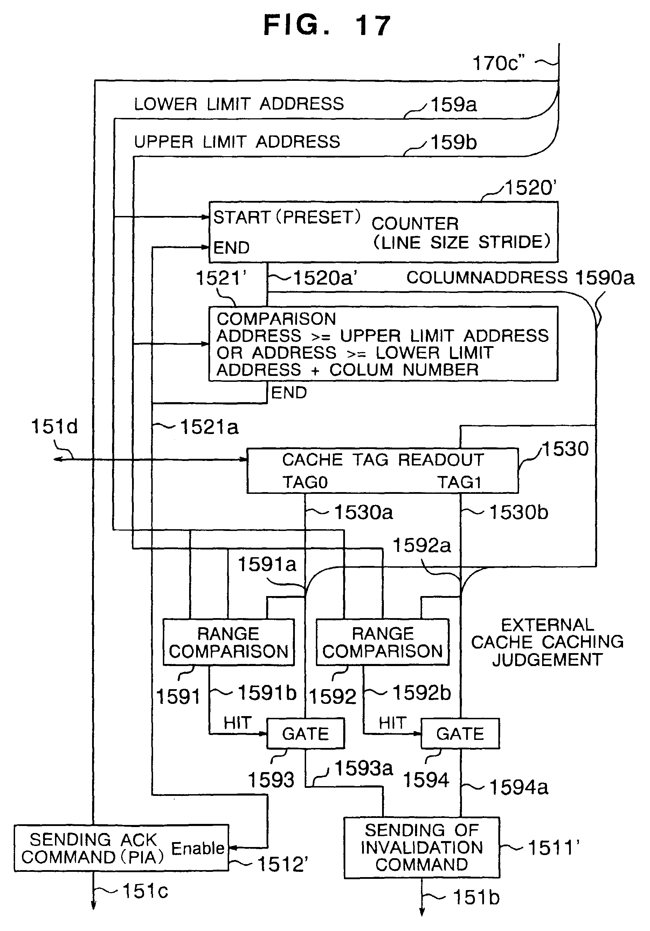

Fig. 17 shows the construction of the page invalidation counter 151". First, the lower limit address 159a and the upper limit address 159b of the designated address range are acquired by the page invalidation command. The lower limit address is pre-set to a counter 1520' and count-up is started. When the counted-up address reaches the upper limit address or is greater than the sum of the lower limit address and the column number, the comparator 1521' generates an end signal for the signal 1521a. The later condition can prevent the same column of the cache from being checked a plurality of times. Receiving the end signal 1521a, the ACK command sender circuit 151' returns the PIA command to the access requesting node through 151c.

The column address 1590a is segmented from the address supplied from the counter 1520' and is supplied to a cache TAG read circuit 1530. The cache TAG read circuit reads in parallel the content of the TAG of the designated column address. Here, TAG0 (1530a) and TAG1 (1530b) are read out because a 2-way cache is assumed as the cache. Cache addresses 1591a and 1592a are generated from the address so read in combination with the column address. Comparators 1591 and 1592 compare and check whether or not these addresses are in between the lower limit address 159a and the upper limit address 159. If they are within the range, the cache addresses are sent to the invalidation command sender circuit 1511" through the gates 1593 and 1594. The invalidation command sender circuit 1511' delivers the invalidation command for the addresses so sent through 151b.

The procedures described above make it possible to send the invalidation command to only the line which is cached by the external cache within the address range designated by the block invalidation command. When the designated address range is greater than the column address, each column address is checked only once, and whether or not the cache address is within the designated address range is checked in parallel for a plurality of ways. In this way, the trouble required for block invalidation can be restricted to:
column address/line size.

### (6) UMA architecture:

In the explanation given above, each node has the NUMA construction having the main memory inside the node. However, the architecture described in this invention can be applied to a machine of a UMA construction having the concentrated main memory.

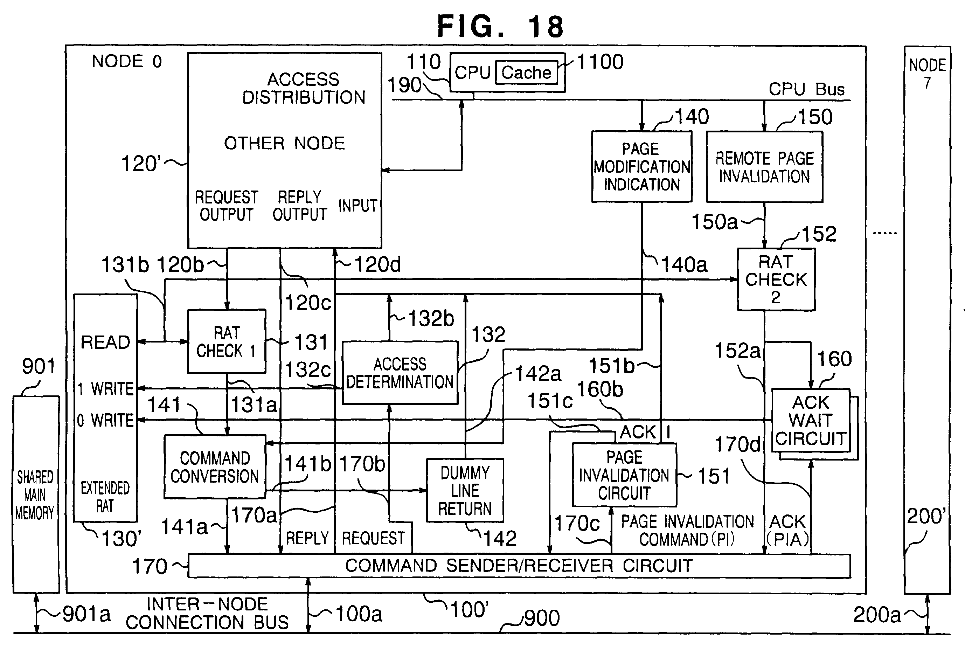

Fig. 18 is a structural view of the multiprocessor according to the present invention in the case of the UMA architecture. The difference from Fig. 1 is that the main memory 121 inside the node does not exist, and a shared main memory 901 is disposed instead. Furthermore, the construction of the extended RAT 130' is different from the RAT in NUMA in the following points.
(a) The bits of the extended RAT are disposed in only the page corresponding to the main memory inside the node, in the NUMA architecture. However, the bits are disposed for the pages of the full (packaged) main memory space in the UMA architecture.
(b) The initial value of each bit of the extended RAT is "1" (shared). Therefore, the state "0" (exclusive) of the RAT is limited to only after the corresponding node recovers the page and executes remote page invalidation. In the case of UMA, too, the operation of the command conversion function at the time of initialization by using the block write page indication register 140, that is one of the characteristic technologies of the present invention, is exactly the same as that of the NUMA architecture.

Next, the explanation will be given on the block invalidation operation of the main memory of other nodes by the remote page invalidation register 150 at the time of page recovery, that is the second characteristic technology of the resent invention. The greatest difference of the UMA architecture from the NUMA is that each node can recover an arbitrary page (because the NUMA is based on the premise that the home node recovers the page). Since the RAT is disposed for the full main memory space in UMA, it is possible to guarantee that the recovered page is not cached to other nodes. Therefore, when initialization of the page is later executed, the process can be executed inside only the node without outputting the command to the inter-node bus. In the case of UMA, each node 100' to 200' can be accomplished by one chip.

### (7) Activation of command in user mode:

In the procedures described above, because the page modification indication register 140 and the remote page invalidation circuit 150 destroy the data of the designated page, the access must be made only after the access right to the page is checked. The explanation given above is based on the premise that the access is made through the OS or the system call and for this reason, the memory protection mechanism by means of hardware is not provided. When the register described above is open to the users (inclusive of the middle-ware), there is the possibility that the address space of other users is undesirably invalidated. However, if the access from the user mode is executed every time through the system call, the problem develops particularly when the overhead of the system call is great

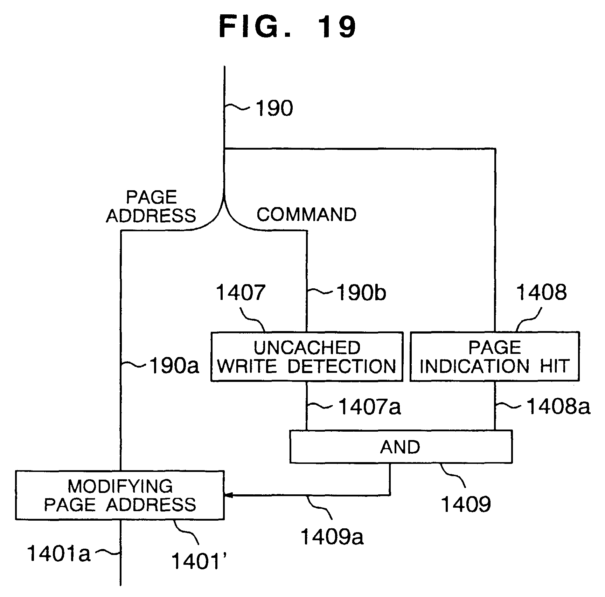

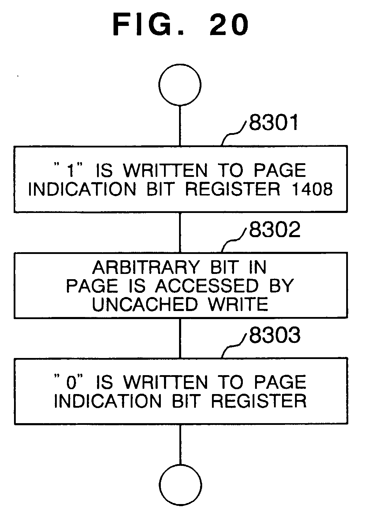

Fig. 19 shows an interface circuit for designating directly the page address from the user mode in the case of the modifying page address register 1401, by way of example. Fig. 20 shows the flow of the program of the page-designating portion (corresponding to the former half of the step 8001 in Fig. 10: the write operation to the remote invalidation page address register 1501 can be accomplished by similar means). The problem here is how to check the protection of the pages (whether or not the program which is now being executed is authorized to write the designated page). In Fig. 19, whether or not the program is authorized to write to the designated page is checked by checking whether or not the CPU write command (Uncached Write) appears on the CPU bus 190.

In Fig. 19, a page indication bit register 1408 is a one-bit register for representing that the program generates the Uncached Write command for designating the page number, and is placed in the page that can be read and written from the program which is under execution.

Prior to page designation, the program writes "1" to the page indication bit register 1408 (step 8301). Next, an arbitrary address inside the page (for example, the first address of the page) is accessed by the Uncached Write command (step 8302). Then, the output 1407a of an Uncached Write detection circuit 1407 becomes active and is subject to AND operation with the output 1408a of the page indication bit register 1408. The signal 1409a becomes active. In consequence, the accessed page address is stored in the block write page address register 1401'. Thereafter, the page indication bit register 1408 is returned to "0" (step 8303). If the write authority to the page does not exist, the write process at the step 8302 fails; hence, the page indication register is not set.

The function described above can accomplish the required protection while permitting the write operation to the block write page address register.

When the write operation is made to the full page such as in initialization of the page, page copy, etc, in the main memory shared type multiprocessor, the present invention makes it possible to write the data without executing line-transfer of the old data from the caches of other nodes and without relying on the command set of the CPU, can drastically reduce latency of the write operation and can also reduce the traffic between the nodes.

When the page is used up by the application, etc, the present invention purges the old data remaining on the caches of other nodes by hardware and can thus guarantee that the remaining data inside the page are not cached to other caches. Therefore, when the corresponding page is accessed next time, the present invention can reduce the cache coherent command to other nodes, and can drastically reduce the traffic between the nodes as well as access latency.

## Claims

1. A multiprocessor system comprising a plurality of nodes (100, 200) each having a CPU (110), a cache (1100) and a main memory (121), and a connection mechanism (900) for connecting said nodes, for executing cache coherent control between said nodes by using said connection mechanism, wherein each of said nodes includes:
means for instructing to purge collectively data on caches of other nodes for each page;
means for transmitting a command to collectively purge the data on said caches of said other nodes for each page to said other nodes in response to said instruction; and
means for receiving said command from said node and purging the data, belonging to the page indicated by said command, on said cache inside said node, from said cache.

2. A multiprocessor system according to claim 1, further including means which uses an invalidation command as said means for purging the cache line from said cache (1100), and discards the data cached to said other nodes when the data cached to said other nodes are purged.

3. A multiprocessor system according to claim 1, further including means which uses a FLUSH command as means for purging said cache line from said cache (1100), and which writes back the data cached to said other nodes when the data are purged from said cache.

4. A multiprocessor system according to claim 1, further including means for reporting that a node receiving a command for collectively purging the data on said caches on said other nodes for each page finishes the execution of said command, to said node that generates said command.

5. A multiprocessor system according to claim 4, wherein each of said nodes has a bit for storing whether or not any possibility exists that a page corresponding to each page of said main memory of inside own local node is cached to other node;
said bit is reset at the time of initialization of said system, is set when the corresponding page of said main memory is accessed from said other nodes, and is reset when the execution of a command for collectively purging the data on said caches of said other nodes for each page is finished; and
said bit is checked when said CPU of said own node accesses said main memory of its own, cache coherence control to said other nodes is executed when said bit is set, and the cache coherence control to said other nodes is restricted when said bit is not set.

6. A multiprocessor system according to claim 1, wherein, when a program uses up a page, a system program of said node having said page on said main memory includes means for generating a command for collectively purging the data on said caches on said other nodes for each page.

7. A multiprocessor according to claim 1, wherein said node generating the command for collectively purging the data on said caches on said other nodes for each page includes means for clearing a corresponding page of its own node to zero.

8. A multiprocessor system according to claim 1, wherein each of said nodes has an external cache besides said CPU, and which further includes means for restricting the output of an unnecessary command by using TAG information of said external cache when any of said nodes receiving the command for collectively purging the data on said caches of said other nodes for each page purges wholly the data belonging to the page designated by said command on said cache of its own from said cache.

9. A multiprocessor system comprising a plurality of nodes (100, 200) each including a CPU (110), a cache (1100) and a main memory (121), and a connection mechanism (900) for connecting said nodes, for executing cache coherent control between said nodes by using said connection mechanism, wherein each of said nodes includes:
means for instructing to collectively purge the data on said cache within the address range designated by said other nodes;
means for transferring a command for collectively purging the data on said cache within the address range designated by said other nodes, to said other nodes in response to said instruction; and
means for receiving said command and purging all the data on said cache inside its own node, belonging to the address range designated by said command, from said cache.

10. A multiprocessor system according to claim 9, wherein each of said nodes includes:
a cache externally packaged besides said CPU; and
means for restricting the output of an unnecessary command by using TAG information of said external cache when it receives a command for collectively purging the data on said cache within the address range designated by said other nodes and purges wholly the data within the address range designated by said command from said cache.

11. A multiprocessor system according to claim 10, wherein each of said nodes includes means for making access only once to each column of TAG of said external cache when it restricts the output of an unnecessary command by using TAG information of said external cache.

12. A multiprocessor system comprising a plurality of nodes (100, 200) each including a CPU (110), a cache (1100) and a main memory (121), and a connection mechanism (900) for connecting said nodes, for executing cache coherent control between said nodes by using said connection mechanism, wherein each of said nodes includes:
block write indication means for indicating to a page on said main memory that block write is made to a page on said main memory;
means for converting a cache command requesting data read-out and invalidation to an invalidation command when said cache command arrives from said CPU for the page designated by said block write indication means, and then transferring said invalidation command to said other nodes; and
means for returning a dummy data from inside said node to said CPU in response to said read-out and invalidation requests.

13. A multiprocessor system according to claim 12, which further includes means for giving a page number to be initialized to said block write indication means when a system program initializes said page.

14. A multiprocessor system according to claim 12, which further includes means for giving a page number of a copying address to said block write indication means when a system program copies the page.

15. A multiprocessor system comprising a plurality of nodes (100, 200) each having a CPU (110), a cache (1100) and a main memory (121), and a connection mechanism (900), for executing cache coherent control between said nodes by using said connection mechanism, wherein each node includes:
means for instructing to purge collectively the data on said caches of said other nodes for each page;
means for transferring a command instructing said other nodes to purge collectively the data on said caches for each page in response to said instruction; and
means for purging wholly the data belonging to the page designated by said command on said cache in its own node from said cache.

16. A multiprocessor system according to claim 15, which further includes means for discarding the data cached to said other nodes when the data are purged from said cache by using an invalidation command, as said means for purging the cache line from said cache.

17. A multiprocessor system according to claim 15, which further includes means for writing back the data cached to said other nodes when the data are purged from said cache by using a FLUSH command, as means for purging the cache line from said cache.

18. A multiprocessor system according to claim 15, which further includes means for reporting the end of the execution of a command for purging collectively the data on said caches of said other nodes for each page, by said node receiving said command, to said node that generates said command.

19. A multiprocessor system according to claim 15, which further includes;
a bit for storing the information representing whether or not the possibility exists that a page corresponding to each page of a main memory space is cached to said other nodes;
means for setting said bit at the time of initialization of said system;
means for setting said bit when the corresponding page of the main memory is accessed from said other nodes;
means for resetting said bit when the execution of a command for collectively purging the data on said caches of said other nodes for each page is completed; and
means for checking said bit when the CPU of its own node accesses said main memory, executing cache coherent control to said other nodes when said bit is set, and restricting the cache control to said other nodes when said bit is not set.

20. A multiprocessor system according to claim 1, which further includes means for giving an instruction from a program of a user mode when said instruction to collectively purge the data on said caches of said other nodes for each page is given, and checking write authority to the designated page.

21. A multiprocessor system according to claim 12, which further includes means for giving an instruction from a program of a user mode when said instruction to collectively purge the data on said caches of said other nodes for each page is given, and checking write authority to the designated page.

22. A multiprocessor system comprising a plurality of nodes (100, 200) and means (900) for connecting said nodes, wherein each of said nodes comprises a CPU (110), a cache (1100), a main memory (121) accessed by a plurality of said nodes, instruction means for instructing to collectively purge the data on said cache for each address range, and means for purging the data belonging to the designated address range from said cache in accordance with the instruction from said instruction means.

23. A multiprocessor system according to claim 22, wherein said instruction means is means for giving an instruction to said other nodes.

24. A multiprocessor system according to claim 23, wherein said instruction means operates in response to the request from a program of a user mode.

25. A multiprocessor system according to claim 23, wherein the data cached by other nodes are invalidated when the data are purged from said cache.

26. A multiprocessor system according to claim 23, wherein the data cached by other nodes are written back when the data are purged from said cache.

27. A multiprocessor system according to claim 22, wherein said address range is a page.

28. A multiprocessor system comprising a plurality of nodes (100, 200), means (900) for connecting said nodes and a memory accessed by said nodes, wherein each of said nodes includes a CPU (110), a cache (1100), instruction means for instructing to collectively purge the data on said cache for each address range and means for purging the data belonging to the designated address range on said cache inside said node from said cache in accordance with the instruction from said instruction means.
